# EUROPÄISCHE PATENTSCHRIFT

(11) **EP 3 167 507 B1**
(45) Veröffentlichungstag und Bekanntmachung des Hinweises auf die Patenterteilung: **07.08.2019**
(21) Anmeldenummer: 15730093.0
(22) Anmeldetag: 09.06.2015
(51) Int. Cl.: H01M 10/6563, H01M 10/6566, H01M 2/10

(54) **GEHÄUSE ZUR AUFNAHME EINER VIELZAHL VON BATTERIEZELLEN MIT EINER IM GEHÄUSE INTEGRIERTEN KÜHLUNGSVORRICHTUNG**
HOUSING FOR ACCOMODATING A PLURALITY OF BATTERY CELLS WITH INTEGRATED COOLING DEVICE
BOÎTE POUR UNE PLURALITÉ DE BATTERIES AVEC DISPOSITIF DE REFROIDEMENT INTÉGRÉ

(30) Priorität: 11.07.2014 DE 102014213579; 24.10.2014 DE 102014221684
(43) Veröffentlichungstag der Anmeldung: 17.05.2017
(73) Patentinhaber: Robert Bosch GmbH, 70442 Stuttgart (DE)
(72) Erfinder: MUELLER, Carsten, 70469 Stuttgart (DE); LORENZ, Lisa, 70176 Stuttgart (DE); JUNG, Ruben, 70374 Stuttgart (DE); RANK, Sandro, 70469 Stuttgart (DE); BOEHME, Jens, 70839 Gerlingen (DE); FEDERLE, Johannes, 72108 Rottenburg (DE)
(86) Internationale Anmeldenummer: PCT/EP2015/062848
(87) Internationale Veröffentlichungsnummer: WO 2016/005131

(56) Entgegenhaltungen:
- DE-A1-102013 219 452
- JP-A- 2007 172 981
- JP-A- 2012 028 207
- US-A1- 2013 149 583

## Beschreibung

Die vorliegende Erfindung betrifft ein Gehäuse zur Aufnahme einer Vielzahl von Batteriezellen mit einer Kühlungsvorrichtung, ein Batteriepack mit einem erfindungsgemäßen Gehäuse sowie ein Kraftfahrzeug mit einem solchen Batteriepack.

### Stand der Technik

Li-Ionen-Batteriesysteme werden als Energiespeicher für den Antrieb in Hybrid- und Elektrofahrzeugen genutzt. Sie bestehen aus mehreren Li-Ionen-Batteriezellen, die elektrisch seriell und/oder parallel verschaltet, durch ein Batteriemanagementsystem überwacht und mechanisch zu einem Gesamtsystem integriert werden. Die Zellen werden bevorzugt in einem bestimmten Temperaturfenster betrieben, um optimale Leistung, minimale Alterung und sicheren Betrieb zu gewährleisten.

Hierfür muss vor allem die während des Betriebs der Zellen entstehende Joulesche Wärme, die durch den elektrischen Strom und den inneren Widerstand der Zelle beschrieben werden kann, sowie die durch reversible chemische Vorgänge in der Zelle entstehende Reaktionsenthalpie aus dem System abgeführt werden.

In vielen technischen Anwendungen werden die Zellen bzw. Module mit Hilfe einer Flüssigkühlung entwärmt. Dazu erfolgt beispielsweise eine Modulmontage auf fluiddurchströmten Platten, die abhängig vom Grad der geforderten Kühlleistung mit Wasser/Glykol-Gemischen bzw. verdampfendem Kältemittel beaufschlagt werden. Nachteilig bei diesen Kühlvarianten sind allem der höhere apparative Aufwand und die Anzahl der benötigten Komponenten, die für eine Integration in das Fahrzeug benötigt werden. Gerade bei kleineren (Niedervolt-) Batteriesystemen kann es von Vorteil sein, vom Thermomanagement des Fahrzeugs unabhängig zu sein, um eine gewisse Flexibilität in Bezug auf den Einbauort zu erhalten und eine Standardisierbarkeit der Module zu ermöglichen.

Dazu ist heute bereits die Luftkühlung bekannt. Aus DE 10 2011 080 975 A1 ist etwa ein Batteriezellenstapel für ein Batteriemodul bekannt, das prismatische Batteriezellen aufweist, zwischen denen prismatische Luftkanäle angeordnet sind. Mittels dieser Luftkanäle ist eine gezielte Luftführung zwischen den Batteriezellen möglich. Es wird weiter vorgeschlagen, den Batteriezellenstapel mit den Luftkanälen in ein entsprechendes Batteriegehäuse einzubringen und gegebenenfalls zu verspannen, d.h. die Luftkanäle sind nicht zusammen mit dem Batteriegehäuse als einstückiges Bauteil ausgebildet und müssen daher zur Bildung eines Batteriezellengehäuses mit Luftkanälen in ein Batteriegehäuse eingefügt und montiert werden.

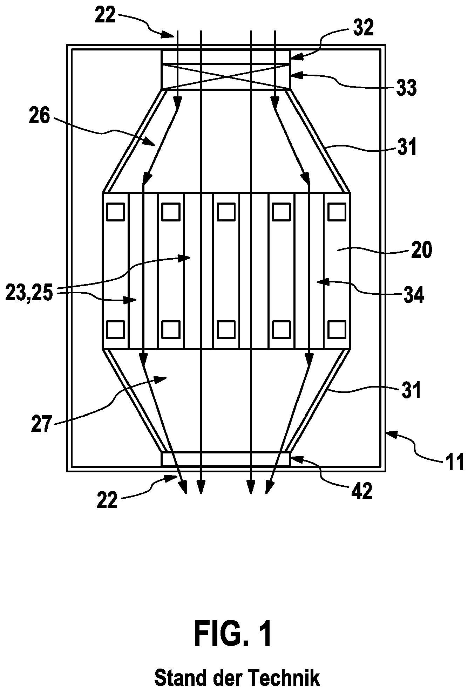

In Fig. 1 ist beispielshaft solch ein Batteriezellengehäuse schematisch dargestellt, d.h. in ein an sich separates Batteriezellengehäuse 11 ist ein Batteriezellenstapel mit Luftkanälen 25 zwischen den einzelnen Batteriezellen 20 eingebaut worden. Dazu wird zunächst ein ebenfalls separater Batteriezellenstapel mit einer Kühlungsvorrichtung aufgebaut. Der luftleitbare Zwischenraum 23 zwischen den Batteriezellen 20 werden durch separate Bauteile, sogenannte Abstandshalter 34 (eng. "Spacer"), realisiert. Zusätzlich werden in vielen luftgekühlten Systemen sogenannte Luftleitbleche 31 (eng. "Air Plenums") verwendet, um den Luftstrom 22 gleichmäßig zwischen den Batteriezellen 20 zu verteilen. Die Kühlungsvorrichtung, die weiter bevorzugt einen Lüfter 33, Verteilerraum 26, Sammelraum 27 sowie Luftfilter 32, 42 umfassen kann, wird schließlich in ein separates Gehäuse 11 montiert.

Ferner wird in DE 10 2007 043 947 A1 ein Kühlkörper für Batteriezellen beschrieben, welcher Kanäle für Kühlmedium aufweist und aus einem einzigen Strangpressprofil hergestellt werden kann. Der Kühlkörper umfasst hingegen nicht die Zu- und Ablaufe für das Kühlmedium. Vielmehr sind hierfür eine erste und eine zweite Deckkappe zum Verschließen der ersten bzw. zweiten Stirnfläche des Kühlkörpers vorgesehen, die die notwendigen Zu- und Ablaufe für das Kühlmedium bereitstellen. Es wird vorgeschlagen, die Deckkappen an dem Kühlkörper geeignet zu befestigen, insbesondere mit dem Kühlkörper zu verschweißen.

Eine weitere Kühlungsstruktur für Batterien wird in JP 2012-028207 A vorgestellt. Damit die Batterien mittels kontrollierter Luftkühlung gekühlt werden können, ist in der Kühlungsstruktur eine Strömungskontrollplatte vorgesehen, die in Strömungsrichtung vor der ersten Reihe der in mehreren Reihen angeordneten Batteriezellen positioniert ist. Die Strömungskontrollplatte weist Öffnungen für den Luftstrom auf und ermöglicht so das Hindurchströmen der Kühlluft durch die Strömungskontrollplatte an gewünschten Stellen. Eine solche Strömungskontrollplatte ist nur vor den Batterien in der ersten Reihe angeordnet und dient nicht gleichzeitig als Abstandshalter der Batterien, insbesondere nicht zum Anordnen der Batterien mit einem Zwischenraum zwischen den Batterien.

Schließlich ist aus US 2006/0216582 A1 ein Gehäuse für Batterien bekannt, bei welchem neben Kühlplatten zusätzlich zwei Öffnungen für den Zulauf der Außenluft vorgesehen sind. Die dem Gehäuse zugeführte Luft wird jedoch nicht zwischen den Batteriezellen hindurch geleitet, sondern bezweckt vielmehr die Kühlung der Kühlplatten. So ist im Zwischenraum zwischen den Batteriezellen kein Luftkanal vorgesehen, sondern Zellbegrenzungsplatten, die aus Materialien mit hoher Wärmeleitfähigkeit bestehen, um möglichst viel Wärme von den Batteriezellen zu den Kühlplatten ableiten zu können.

Zusammenfassend ist grundsätzlich ein Gehäuse für Batteriezellen aus dem Stand der Technik bekannt, das eine Kühlungsvorrichtung mittels eines Luftstromes umfasst. Die bekannte Systemkonfiguration ist allerdings aus folgenden Gründen einerseits technisch aufwendig und andererseits auch wirtschaftlich unvorteilhaft: Insgesamt werden sehr viele unterschiedliche Teile eingesetzt, die zunächst einzeln hergestellt und später zusammengesetzt werden. Konkret wird zuerst ein an sich separates Modul bzw. Pack aus Batteriezellen mit einer Kühlungsvorrichtung, wie etwa Abstandhalter zur Bereitstellung eines Luftkanals zwischen den Batteriezellen, aufgebaut. Der gesamte Batteriezellenpack wird dann wiederum in einem an sich separaten Gehäuse verbaut.

Es besteht daher ein Bedarf an einem Gehäuse für Batteriezellen, das mit einer technisch einfachen Anordnung zur zuverlässigen Kühlung der Batteriezellen mittels eines Kühlstromes kostengünstig bereitgestellt werden kann.

### Offenbarung der Erfindung

Das Gehäuse gemäss Anspruch 1 zur Aufnahme einer Vielzahl von Batteriezellen umfasst eine Kühlungsvorrichtung mit einer Eintrittsstelle und einer Austrittsstelle für einen Luftstrom zur Kühlung der Batteriezellen. Dabei ist das Gehäuse zusammen mit der im Gehäuse integrierten Kühlungsvorrichtung als ein einstückiges Bauteil ausgebildet. Zusätzlich weist die Kühlungsvorrichtung Abstandshalter zum Anordnen aller aufzunehmenden Batteriezellen mit einem luftleitbaren Zwischenraum zwischen den Batteriezellen auf, wodurch dem Luftstrom ein Luftkanal zwischen den Batteriezellen bereitgestellt wird.

Die erfindungsgemäße Ausgestaltung des Gehäuses beruht auf folgenden Erkenntnissen: Zunächst wurde festgestellt, dass eine kostengünstige Herstellung des Gehäuses mit einer Luftkühlvorrichtung erzielt werden kann, in dem die Anzahl der für das gesamte Gehäuse benötigten separaten Bauteilen erheblich reduziert wird. Im optimalsten Fall ist dann das gesamte Gehäuse als ein einstückiges Bauteil ausgebildet. Daraus folgt, dass möglichst viele Teile der Kühlvorrichtung in das einstückige Gehäuse integriert werden sollten, d.h. das Gehäuse mit der integrierten Kühlvorrichtung wird in einem einzigen Fertigungsschritt hergestellt.

Damit die Kühlvorrichtung zuverlässige Kühlwirkung erzielen kann, sind hierfür die notwendigen Mindestanforderungen an die Kühlvorrichtung zu identifizieren. Es wurde weiter festgestellt, dass neben den für die Luftkühlung der Batteriezellen grundsätzlich erforderlichen Öffnungen am Gehäuse, also Eintritts- und Austrittsstelle für den Luftstrom, für eine zuverlässige Kühlwirkung entscheidend ist, dass die Kühlströmung in die Zwischenräume zwischen den Batteriezellen geleitet wird. Diese Erkenntnis führte zur der erfinderischen Maßnahme, die in das Gehäuse integrierte Kühlvorrichtung mit Abstandshalter zum Anordnen aller aufzunehmenden Batteriezellen mit einem luftleitbaren Zwischenraum zwischen den Batteriezellen zu versehen, wodurch dem Luftstrom ein Luftkanal zwischen den Batteriezellen bereitgestellt wird.

Mit dem erfindungsgemäß geforderten Abstandshalter wird vorteilhaft erreicht, dass einerseits eine zuverlässige Halterung für die Batteriezellen im Gehäuse bereitgestellt wird, andererseits gleichzeitig eine für eine wirksame Luftkühlung geeignete Anordnung der Batteriezellen gewährleistet wird. Insofern übernimmt der Abstandshalter nicht nur eine mechanische Halterungsfunktion, sondern liefert einen wesentlichen Beitrag zur effektiven Luftkühlung. Daher kann der Abstandshalter als ein wesentlicher Teil der Kühlungsvorrichtung betrachtet werden.

Im Ergebnis ist das erfindungsgemäß bereitgestellte Gehäuse für Batteriezellen vorteilhaft kostengünstig herstellbar und umfasst bereits alle für eine zuverlässige Luftkühlung erforderlichen Bauteile, insbesondere ohne separate Bauteile einbauen zu müssen.

Vorteilhafte Weiterbildungen der Erfindung sind in den Unteransprüchen angegeben und in der Beschreibung beschrieben.

### Zeichnung

Ausführungsbeispiele der Erfindung werden anhand der Zeichnungen näher erläutert. Es zeigt:
Figur 1 ein Ausführungsbeispiel eines Gehäuses für Batteriezellen mit einer Vorrichtung zur Luftkühlung aus dem Stand der Technik,
Figur 2 ein erstes Ausführungsbeispiel des erfindungsgemäßen Gehäuses für Batteriezellen mit einer Vorrichtung zur Luftkühlung in Draufsicht,
Figur 3 zwei graphische Darstellungen von Simulationsergebnissen zur Luftströmung,
Figur 4 ein zweites Ausführungsbeispiel des erfindungsgemäßen Gehäuses für Batteriezellen mit einer Vorrichtung zur Luftkühlung in Draufsicht,
Figur 5 ein drittes Ausführungsbeispiel des erfindungsgemäßen Gehäuses für Batteriezellen mit einer Vorrichtung zur Luftkühlung in perspektivischer Darstellung, und
Figur 6 ein viertes Ausführungsbeispiel des erfindungsgemäßen Gehäuses für Batteriezellen mit einer Vorrichtung zur Luftkühlung in perspektivischer Darstellung.

### Beschreibung der Ausführungsbeispiele

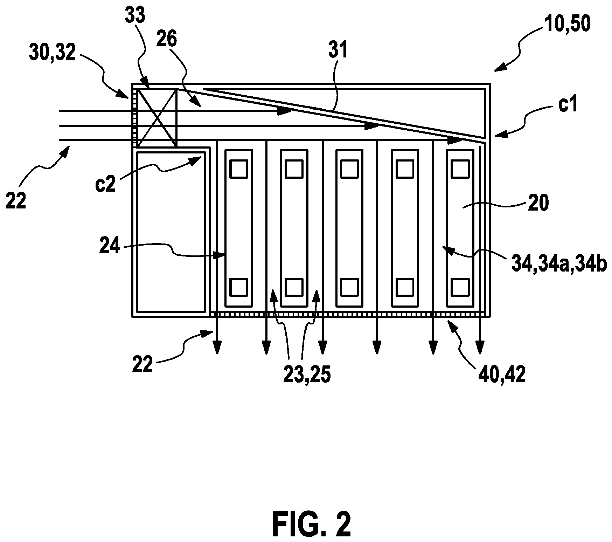

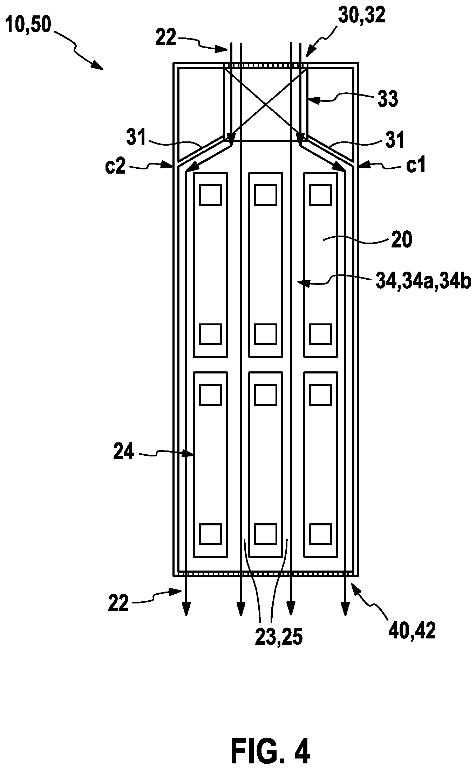

Ein erstes Ausführungsbeispiel des erfindungsgemäßen Gehäuses wird mit Hilfe der Figur 2 erläutert. Grundsätzlich wird mit der Erfindung ein Gehäuse 10 zur Aufnahme einer Vielzahl von Batteriezellen 20 bereitgestellt, wobei das Gehäuse 10 eine Kühlungsvorrichtung mit einer Eintrittsstelle 30 und einer Austrittsstelle 40 für einen Luftstrom 22 zur Kühlung der Batteriezellen 20 umfasst. Die Batteriezellen 20 können durch Lithium-Ionen-Batteriezellen ausgebildet sein. Das Gehäuse 10 ist bevorzugt ein Kunststoff-Gehäuse. Erfindungsgemäß wird zusätzlich gefordert, dass das Gehäuse 10 zusammen mit der im Gehäuse 10 integrierten Kühlungsvorrichtung als ein einstückiges Bauteil ausgebildet ist. Dabei weist die Kühlungsvorrichtung zusätzlich Abstandshalter 34; 34a, 34b zum Anordnen aller aufzunehmenden Batteriezellen 20 mit einem luftleitbaren Zwischenraum 23 zwischen den Batteriezellen 20 auf, wodurch dem Luftstrom 22 ein Luftkanal 25 zwischen den Batteriezellen 20 bereitgestellt wird. Der Abstandshalter 34; 34a, 34b selbst ist in Figuren 2 und 4 aus Übersichtlichkeitsgründen nicht dargestellt; lediglich seine Position wird durch die Bezugsziffer 34; 34a, 34b angedeutet.

In der Ausführungsform der Erfindung gemäß Figur 2 weist die Kühlungsvorrichtung einen in Strömungsrichtung des Luftstroms 22 der Eintrittsstelle 30 nachgeordneten Verteilerraum 26 zur Verteilung des Luftstroms 22 auf. Im Verteilerraum 26 wird der durch die Eintrittsstelle 30 in das Gehäuse 10 eingeführte Luftstrom 22 vorteilhaft auf die zu kühlenden Batteriezellen 20 verteilt. Aufgrund des Verteilerraums 26 muss der Luftstrom 22 also vorteilhaft nicht bereits an der Eintrittsstelle 30 notwendigerweise eine Breite bzw. einen Durchmesser aufweisen, der für die Kühlung aller Batteriezellen 20 im Batteriezellenstapel erforderlich ist. Dementsprechend kann die Eintrittsstelle 30 des Gehäuses 10 auch bei großem Batteriezellstapel kompakt ausgestaltet werden. Spätestens beim Verlassen des Verteilerraums 26 hat der Luftstrom 22 die notwendige Breite erreicht.

Hierfür kann der Verteilerraum 26 mindestens ein Luftleitblech 31 zur Leitung des Luftstroms 22 aufweisen. Insbesondere kann der Verteilerraum 26, wie in Fig. 2 erkennbar, durch ein Luftleitblech 31 zumindest bereichsweise begrenzt sein. Je nach Bedarf ist es aber auch möglich, dass ein Luftleitblech 31 innerhalb eines Verteilerraumes 26 angeordnet ist. So könnte etwa der Luftstrom 22 frühzeitig in mehrere Richtungen verteilt bzw. kanalisiert werden. Im Übrigen soll der Begriff "Luftleitblech 31" in der vorliegenden Beschreibung nicht als einen auf ein bestimmtes Material einschränkenden Hinweis zum Bauteil verstanden werden. Das Luftleitblech 31 kann im erfindungsgemäßen Gehäuse 10 auch aus nichtmetallischen Materialen aufgebaut sein. So kann das Luftleitblech 31 auch aus einem Kunststoff bestehen.

Weiter ist der Figur 2 zu entnehmen, dass das Luftleitblech 31 derart angeordnet ist, dass der auf das Luftleitblech 31 geführte Luftstrom 22 vom Luftleitblech 31 parallel zu Seitenflächen 24 der aufzunehmenden Batteriezellen 20 abgelenkt wird. Diese Maßnahme basiert auf der Erkenntnis, dass das Luftleitblech 31 nicht nur zur bloßen Verteilung des Luftstroms 22 auf mehrere Batteriezellen 20 geeignet ist, sondern auch zur gezielten Ablenkung des Luftstroms 22 in eine parallele Richtung zu Seitenflächen 24 der aufzunehmenden Batteriezellen 20. Besonders geeignet ist eine Ablenkung des Luftstroms 22 durch ein Luftleitblech 31, wenn der abgelenkte Luftstrom 22 zwischen den Seitenflächen 24 der Batteriezellen 20 verläuft, d.h. der Luftstrom 22 kühlt bei seiner Durchströmung im Zwischenraum 23 der Batteriezellen 20 gleichzeitig zwei benachbart angeordnete Batteriezellen 20.

In der Ausführungsform gemäß Figur 2 verläuft der Luftstrom 22 parallel zu den breitflächigen Seitenflächen 24 der Batteriezellen 20. Je nach Bedarf kann der Luftstrom 22 aber auch parallel zu den schmalflächigen Seitenflächen 24 der Batteriezellen 20 verlaufen. Eine Möglichkeit hierzu wäre beispielsweise, dass die Batteriezellen 20 - im Vergleich zur Ausführungsform gemäß Figur 2 - jeweils um 90° gedreht angeordnet sind.

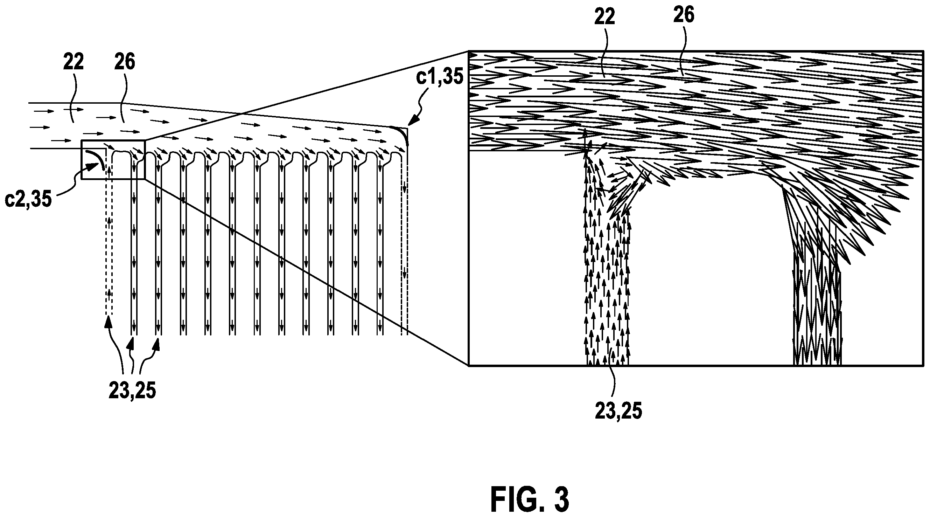

Gemäss der Erfindung ist vorteilhaft vorgesehen, dass der Verteilerraum 26 mindestens eine Ecke c1, c2 mit einer - wie in Figur 3 angedeuteten - Rundung 35 zur gleichmäßigen Verteilung des Luftstroms 22 aufweist. Diese Maßnahme beruht auf der Erkenntnis, dass die Ausgestaltung der Ecken c1, c2 im Verteilerraum 26 einen Einfluss auf die gleichmäßige Verteilung des Luftstroms 22 hat. In Figur 2 weist der Verteilerraum 26 beispielhaft keine gerundete Ecken c1, c2 auf. In solchen Fällen besteht, wie die Simulationen gemäß Figur 3 zeigen, die Möglichkeit, dass der Luftstrom 22 nicht homogen alle Zwischenräume 23 zwischen den Batteriezellen 20 durchströmt. Die Flussrate des Luftstroms 22 kann dabei größer als 0 (Null) und kleiner gleich 80 m³/h betragen. Bevorzugt hat die Flussrate einen Wert aus dem Bereich von 20 bis 60 m³/h.

Die linke Darstellung in Fig. 3 zeigt eine Übersicht über die Stärke (Geschwindigkeit) des Luftstroms 22 im Verteilerraum 26 sowie in den Luftkanälen 25 zwischen den Batteriezellen 20 unter einer gegebenen, konstanten Zufuhr der Kühlluft bei fehlender Rundung 35 an den Ecken c1, c2. Der rechteckige Ausschnitt aus der Übersicht in der linken Darstellung ist vergrößert in der rechten Darstellung gezeigt. Die kleinen eingezeichneten Striche bzw. Pfeile in den Darstellungen repräsentieren die Verteilung und Stärke des Luftstroms 22. Die Simulationen zeigen, dass die äußeren Luftkanäle 25, insbesondere der erste, an der Ecke c2 angeordnete Luftkanal 25, weniger mit Luftstrom 22 versorgt wird als die inneren Luftkanäle 25. Ein Verteilerraum 26 mit mindestens einer Ecke c1, c2 mit einer Rundung 35 trägt daher zur gleichmäßigen Verteilung des Luftstroms 22 bei.

Es wird insbesondere vorgeschlagen, mindestens eine Ecke c1, c2 mit einer Rundung 35 für die Leitung des Luftstroms 22 in einen Luftkanal 25 an einer Endposition zu versehen. Bevorzugt kann die mindestens eine Ecke c1 mit einer Rundung 35 durch ein Luftleitblech 31 mit einer Rundung 35 an seinem Endbereich ausgestaltet sein.

In einer Weiterbildung der Erfindung weist die Kühlungsvorrichtung mindestens einen Luftfilter 32, 42 auf. Der Luftfilter 32, 42 kann bevorzugt als Eintrittsstelle 30 und/oder als Austrittsstelle 40 ausgebildet sein. So wird gewährleistet, dass nur gefilterter, reiner Luftstrom 22 in das Gehäuse 10 eingeführt wird. Der Luftfilter 42 als Austrittsstelle 40 verhindert, dass auch bei fehlender, strömender Kühlungsluft unter keinen Umständen die Außenluft ungefiltert über die Austrittsstelle 40 in das Gehäuse 10 eindringt.

Zur Verstärkung des Luftstroms 22 kann die Kühlungsvorrichtung einen Lüfter 33 aufweisen. Bevorzugt ist der Lüfter 33 benachbart zur Eintrittsstelle 30 angeordnet. So wird gewährleistet, dass der gesamte Luftstrom 22 innerhalb des Gehäuses 10 verstärkt wird.

Das zweite Ausführungsbeispiel des erfindungsgemäßen Gehäuses 10 für Batteriezellen 20 gemäß Figur 4 zeigt eine Variante, bei der die Batteriezellen 20 nicht nur nebeneinander, sondern auch hintereinander angeordnet sein können. So können mehrere Batteriezellenstapel im Gehäuse 10 angeordnet werden. Das Gehäuse 10 hat daher eine längliche Quaderform. Die Bezugszeichen in Figur 4 haben übrigens die gleiche Bedeutung wie in der Figur 2 (bzw. wie in der gesamten vorliegenden Anmeldung), und werden daher hier nicht wiederholt beschrieben.

Eine weitere, nicht in Figuren dargestellte Möglichkeit besteht darin, die Batteriezellen 20 auch übereinander zu stapeln. Die äußere Form des Gehäuses 10 kann also vorteilhaft dem jeweiligen Bedarf angepasst hergestellt werden, ohne dabei von der erfindungsgemäßen Ausgestaltung des Gehäuses 10 abzuweichen.

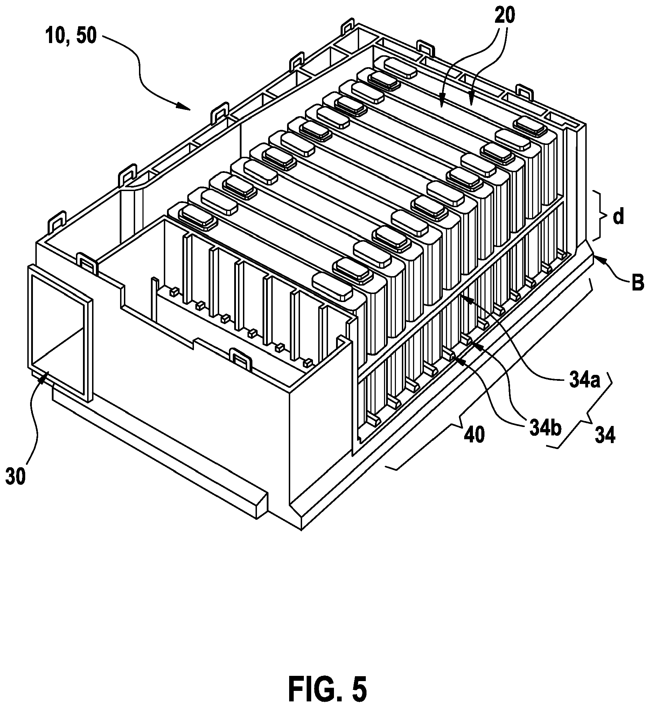

Ein drittes Ausführungsbeispiel des erfindungsgemäßen Gehäuses 10 für Batteriezellen 20 wird in Figur 5 in perspektivischer Darstellung gezeigt. Auch in dieser Ausführungsform wird zunächst ein Gehäuse 10 mit einer Kühlungsvorrichtung bereitgestellt, wobei die Kühlungsvorrichtung eine Eintrittsstelle 30 und eine Austrittsstelle 40 für einen Luftstrom 22 zur Kühlung der Batteriezellen 20 umfasst. Weiter ist in dieser Figur 5 der Abstandshalter 34; 34a, 34b dargestellt, der in Figuren 2 und 4 aus Übersichtlichkeitsgründen nicht dargestellt ist. In dieser Ausführungsform ist der Abstandshalter 34; 34a, 34b im Gehäuse 10 mit einer Bodenfläche B durch einen Zwischenebenen-Abstandshalter 34a ausgestaltet, welcher in einer Ebene mit einem Abstand d zur Bodenfläche B angeordnet ist. Der Abstand d zur Bodenfläche B ist so gewählt, dass der Zwischenebenen-Abstandshalter 34a die Batteriezellen 20 nach ihrer Aufnahme im Gehäuse 10 etwa in ihrer mittleren Höhe umgreift.

Alternativ oder bevorzugt zusätzlich ist der Abstandshalter 34; 34a, 34b im Gehäuse 10 mit der Bodenfläche B durch einen Boden-Abstandshalter 34b ausgestaltet, welcher an der Bodenfläche B angeordnet ist. Den Batteriezellen 20 werden durch den Boden-Abstandshalter 34b eine definierte Anordnung im Gehäuse 10 bereitgestellt, so dass nach ihrer Aufnahme im Gehäuse 10 zwischen den Batteriezellen 20 jeweils ein Luftkanal 25 gebildet wird.

Obwohl in der Ausführungsform nach Figur 5 nicht vorgesehen und daher nicht dargestellt, kann bei Bedarf die Kühlungsvorrichtung einen in Strömungsrichtung des Luftstroms 22 der Austrittsstelle 40 vorgelagerten Sammelraum 27 zur Sammlung des Luftstroms 22 aufweisen.

Es sei an dieser Stelle nochmals klargestellt, dass alle Teile der Kühlungsvorrichtung, sofern sie in einer bestimmten Ausführungsform der Erfindung vorgesehen sind, im einstückigen Gehäuse 10 als integrierte Teile bereitgestellt werden.

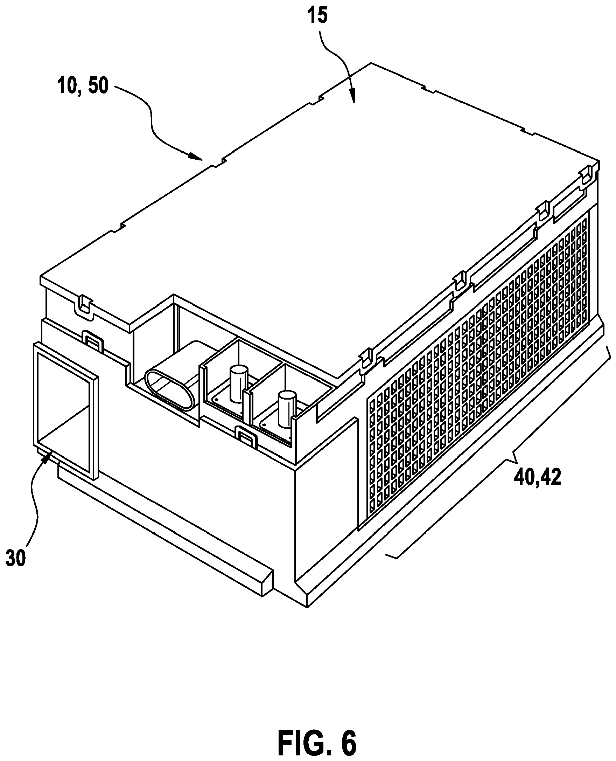

Ferner wird ein Batteriepack 50 mit einem erfindungsgemäßen Gehäuse 10 und darin angeordneten Batteriezellen 20 als einen weiteren Gegenstand der Erfindung bereitgestellt. Wie in einem weiteren Ausführungsbeispiel der Erfindung nach Figur 6 dargestellt, kann der Batteriepack 50 ein Gehäuse 10 aufweisen, das einen separaten Deckel 15 umfasst. Der separate Deckel 15 ist also nicht im einstückigen Gehäuse 10 integriert. Mit dem separaten Deckel 15 werden die im Gehäuse 10 angeordneten Batteriezellen 20 vor äußeren, schädlichen Einwirkungen von allen Seiten geschützt. Bevorzugt kann der Deckel 15 mit elektronischen Bauelementen ausgestattet sein. Beispielhaft kann der Deckel 15 elektronische Bauteile umfassen, die als Zellverbinder nach seinem Aufbringen auf das Gehäuse 10 eine elektrische Verbindung zwischen den Batteriezellen 20 herbeiführen.

Der erfindungsgemäße Batteriepack 50 kann zu vielfältigen Zwecken eingesetzt bzw. eingebaut werden. Es wird beispielhaft vorgeschlagen, ein Kraftfahrzeug, insbesondere elektromotorisch antreibbares Kraftfahrzeug, mit einem erfindungsgemäßen Batteriepack 50 zu versehen, wobei der Batteriepack 50 mit einem Antriebssystem des Kraftfahrzeugs verbunden ist.

## Patentansprüche

1. Gehäuse (10) zur Aufnahme einer Vielzahl von Batteriezellen (20), insbesondere Lithium-Ionen-Batteriezellen, wobei das Gehäuse (10), insbesondere ein Kunststoff-Gehäuse, eine Kühlungsvorrichtung mit einer Eintrittsstelle (30) und einer Austrittsstelle (40) für einen Luftstrom (22) zur Kühlung der Batteriezellen (20) umfasst, wobei das Gehäuse (10) zusammen mit der im Gehäuse (10) integrierten Kühlungsvorrichtung als ein einstückiges Bauteil ausgebildet ist, wobei die Kühlungsvorrichtung zusätzlich Abstandshalter (34; 34a, 34b) ausgebildet zum Anordnen und mechanischen Haltern aller aufzunehmenden Batteriezellen (20) mit einem luftleitbaren Zwischenraum (23) zwischen den Batteriezellen (20) aufweist, wodurch dem Luftstrom (22) ein Luftkanal (25) zwischen den Batteriezellen (20) bereitgestellt wird, wobei die Kühlungsvorrichtung einen in Strömungsrichtung des Luftstroms (22) der Eintrittsstelle (30) nachgeordneten und vor den Batteriezellen (20) angeordneten Verteilerraum (26) zur Verteilung des Luftstroms (22) aufweist, wobei der Verteilerraum (26) mindestens eine Ecke (c1, c2) mit einer Rundung (35) zur gleichmäßigen Verteilung des Luftstroms (22) aufweist.

2. Gehäuse (10) nach Anspruch 1 **dadurch gekennzeichnet,**
**dass** der Verteilerraum (26) mindestens ein Luftleitblech (31) zur Leitung des Luftstroms (22) aufweist.

3. Gehäuse (10) nach Anspruch 2 **dadurch gekennzeichnet,**
**dass** das Luftleitblech (31) derart angeordnet ist, dass der auf das Luftleitblech (31) geführte Luftstrom (22) vom Luftleitblech (31) parallel zu Seitenflächen (24) der aufzunehmenden Batteriezellen (20), insbesondere zwischen den Seitenflächen (24) der aufzunehmenden Batteriezellen (20), abgelenkt wird.

4. Gehäuse (10) nach Anspruch 3 **dadurch gekennzeichnet,**
**dass** die mindestens eine Ecke (c1, c2) mit einer Rundung (35) für die Leitung des Luftstroms (22) in einen Luftkanal (25) an einer Endposition vorgesehen ist.

5. Gehäuse (10) nach Anspruch 3 oder 4 **dadurch gekennzeichnet,**
**dass** die mindestens eine Ecke (c1, c2) mit einer Rundung (35) durch ein Luftleitblech (31) mit einer Rundung (35) an seinem Endbereich ausgestaltet ist.

6. Gehäuse (10) nach einem der Ansprüche 1 bis 5, **dadurch gekennzeichnet,**
**dass** die Kühlungsvorrichtung mindestens einen Luftfilter (32, 42), insbesondere ausgebildet als Eintrittsstelle (30) und/oder als Austrittsstelle (40), aufweist.

7. Gehäuse (10) nach einem der Ansprüche 1 bis 6, **dadurch gekennzeichnet,**
**dass** die Kühlungsvorrichtung einen Lüfter (33), insbesondere benachbart zur Eintrittsstelle (30) angeordnet, aufweist.

8. Gehäuse (10) nach einem der Ansprüche 1 bis 7, **dadurch gekennzeichnet,**
**dass** der Abstandshalter (34; 34a, 34b) im Gehäuse (10) mit einer Bodenfläche (B) durch einen Zwischenebenen-Abstandshalter (34a) ausgestaltet ist, welcher in einer Ebene mit einem Abstand (d) zur Bodenfläche (B) angeordnet ist.

9. Gehäuse (10) nach einem der Ansprüche 1 bis 8, **dadurch gekennzeichnet,**
**dass** der Abstandshalter (34; 34a, 34b) im Gehäuse (10) mit einer Bodenfläche (B) durch einen Boden-Abstandshalter (34b) ausgestaltet ist, welcher an der Bodenfläche (B) angeordnet ist.

10. Gehäuse (10) nach einem der Ansprüche 1 bis 9, **dadurch gekennzeichnet,**
**dass** die Kühlungsvorrichtung einen in Strömungsrichtung des Luftstroms (22) der Austrittsstelle (40) vorgelagerten Sammelraum (27) zur Sammlung des Luftstroms (22) aufweist.

11. Batteriepack (50) mit einem Gehäuse (10) nach einem der Ansprüche 1 bis 10 und darin angeordneten Batteriezellen (20).

12. Batteriepack (50) nach Anspruch 11, **dadurch gekennzeichnet,**
**dass** das Gehäuse (10) einen separaten Deckel (15), insbesondere einen Deckel (15) mit elektronischen Bauelementen, umfasst.

13. Kraftfahrzeug, insbesondere elektromotorisch antreibbares Kraftfahrzeug, mit einem Batteriepack (50) nach Anspruch 11 oder 12, wobei das Batteriepack (50) mit einem Antriebssystem des Kraftfahrzeuges verbunden ist.

## Claims

1. Housing (10) for accommodation of a multiplicity of battery cells (20), in particular lithium-ion battery cells, wherein the housing (10), in particular a plastic housing, comprises a cooling device with an inlet point (30) and an outlet point (40) for an air stream (22) for cooling the battery cells (20), wherein the housing (10) is designed as an integral component together with the cooling device integrated in the housing (10), wherein the cooling device additionally has spacers (34; 34a, 34b) designed for arranging and mechanically holding all the battery cells (20) to be accommodated with an intermediate space (23), through which air can be guided, between the battery cells (20), thereby making available to the air stream (22) an air channel (25) between the battery cells (20), wherein the cooling device has a distributor space (26) for distributing the air stream (22), which is arranged after the inlet point (30) and before the battery cells (20) in the flow direction of the air stream (22), wherein the distributor space (26) has at least one corner (c1, c2) with a rounded portion (35) for uniform distribution of the air stream (22).

2. Housing (10) according to Claim 1,
**characterized**
**in that** the distributor space (26) has at least one baffle plate (31) for guiding the air stream (22).

3. Housing (10) according to Claim 2,
**characterized**
**in that** the baffle plate (31) is arranged in such a way that the air stream (22) guided onto the baffle plate (31) is deflected by the baffle plate (31) parallel to the lateral surfaces (24) of the battery cells (20) to be accommodated, in particular between the lateral surfaces (24) of the battery cells (20) to be accommodated.

4. Housing (10) according to Claim 3,
**characterized**
**in that** the at least one corner (c1, c2) with a rounded portion (35) is provided for guiding the air stream (22) into an air channel (25) at an end position.

5. Housing (10) according to Claim 3 or 4,
**characterized**
**in that** the at least one corner (c1, c2) with a rounded portion (35) is formed by a baffle plate (31) with a rounded portion (35) in the end region thereof.

6. Housing (10) according to one of Claims 1 to 5,
**characterized**
**in that** the cooling device has at least one air filter (32, 42), in particular one designed as an inlet point (30) and/or as an outlet point (40).

7. Housing (10) according to one of Claims 1 to 6,
**characterized**
**in that** the cooling device has a fan (33), in particular a fan arranged adjacent to the inlet point (30).

8. Housing (10) according to one of Claims 1 to 7,
**characterized**
**in that** the spacer (34; 34a, 34b) is formed in the housing (10) having a bottom surface (B) by an intermediate-level spacer (34a), which is arranged in a plane at a distance (d) from the bottom surface (B).

9. Housing (10) according to one of Claims 1 to 8,
**characterized**
**in that** the spacer (34; 34a, 34b) is formed in the housing (10) having a bottom surface (B) by a bottom spacer (34b), which is arranged on the bottom surface (B).

10. Housing (10) according to one of Claims 1 to 9,
**characterized**
**in that** the cooling device has a collecting space (27) for collecting the air stream (22), which is arranged ahead of the outlet point (40) in the flow direction of the air stream (22).

11. Battery pack (50) having a housing (10) according to one of Claims 1 to 10 and battery cells (20) arranged therein.

12. Battery pack (50) according to Claim 11,
**characterized**
**in that** the housing (10) has a separate cover (15), in particular a cover (15) having electronic components.

13. Motor vehicle, in particular motor vehicle that can be driven by electric motor, having a battery pack (50) according to Claim 11 or 12, wherein the battery pack (50) is connected to a drive system of the motor vehicle.

## Revendications

1. Boîtier (10) destiné à accueillir une pluralité de cellules de batterie (20), notamment des cellules de batterie aux ions de lithium, le boîtier (10), notamment un boîtier en matière plastique, comportant un dispositif de refroidissement pourvu d'un point d'entrée (30) et d'un point de sortie (40) pour un courant d'air (22) servant à refroidir les cellules de batterie (20), le boîtier (10) étant réalisé sous la forme d'un élément structural monobloc conjointement avec le dispositif de refroidissement intégré dans le boîtier (10), le dispositif de refroidissement possédant des entretoises (34 ; 34a, 34b) supplémentaires configurées pour disposer et maintenir mécaniquement toutes les cellules de batterie (20) à accueillir avec un espace intermédiaire (23) entre les cellules de batterie (20) dans lequel peut circuler de l'air, moyennant quoi un canal à air (25) est mis à disposition du courant d'air (22) entre les cellules de batterie (20), le dispositif de refroidissement possédant un espace de distribution (26) servant à la distribution du courant d'air (22), disposé en aval du point d'entrée (30) et disposé avant les cellules de batterie (20) dans un sens d'écoulement du courant d'air (22), l'espace de distribution (26) possédant au moins un coin (c1, c2) muni d'un arrondi (35) destiné à une distribution homogène du courant d'air (22) .

2. Boîtier (10) selon la revendication 1, **caractérisé en ce que** l'espace de distribution (26) possède au moins un déflecteur d'air (31) destiné à guider le courant d'air (22).

3. Boîtier (10) selon la revendication 2, **caractérisé en ce que** le déflecteur d'air (31) est disposé de telle sorte que le courant d'air (22) acheminé sur le déflecteur d'air (31) est dévié par le déflecteur d'air (31) parallèlement aux surfaces latérales (24) des cellules de batterie (20) à accueillir, notamment entre les surfaces latérales (24) des cellules de batterie (20) à accueillir.

4. Boîtier (10) selon la revendication 3, **caractérisé en ce que** l'au moins un coin (c1, c2) muni d'un arrondi (35) pour le guidage du courant d'air (22) dans un canal à air (25) est disposé au niveau d'une position finale.

5. Boîtier (10) selon la revendication 3 ou 4, **caractérisé en ce que** l'au moins un coin (c1, c2) muni d'un arrondi (35) est réalisé par un déflecteur d'air (31) muni d'un arrondi (35) au niveau de sa zone d'extrémité.

6. Boîtier (10) selon l'une des revendications 1 à 5, **caractérisé en ce que** le dispositif de refroidissement possède au moins un filtre (32, 42), notamment réalisé sous la forme de point d'entrée (30) et/ou de point de sortie (40).

7. Boîtier (10) selon l'une des revendications 1 à 6, **caractérisé en ce que** le dispositif de refroidissement possède un ventilateur (33), notamment voisin du point d'entrée (30).

8. Boîtier (10) selon l'une des revendications 1 à 7, **caractérisé en ce que** les entretoises (34 ; 34a, 34b) dans le boîtier (10) ayant une surface de fond (B) sont réalisées par une entretoise de plan intermédiaire (34a), laquelle est disposée dans un plan ayant un écart (d) de la surface de fond (B).

9. Boîtier (10) selon l'une des revendications 1 à 8, **caractérisé en ce que** les entretoises (34 ; 34a, 34b) dans le boîtier (10) ayant une surface de fond (B) sont réalisées par une entretoise de fond (34b) qui est disposée sur la surface de fond (B).

10. Boîtier (10) selon l'une des revendications 1 à 9, **caractérisé en ce que** le dispositif de refroidissement possède un espace collecteur (27) servant à collecter le courant d'air (22) et monté en amont du point de sortie (40) dans le sens d'écoulement du courant d'air (22).

11. Bloc de batteries (50) comprenant un boîtier (10) selon l'une des revendications 1 à 10 et des cellules de batterie (20) disposées dans celui-ci.

12. Bloc de batteries (50) selon la revendication 11, **caractérisé en ce que** le boîtier (10) comporte un couvercle (15) séparé, notamment un couvercle (15) comprenant des composants électroniques.

13. Véhicule automobile, notamment véhicule automobile à propulsion électromotorisée, comprenant un bloc de batteries (50) selon la revendication 11 ou 12, le bloc de batteries (50) étant relié à un système de propulsion du véhicule automobile.
